# EUROPEAN PATENT SPECIFICATION

(11) **EP 2 230 736 B1**
(45) Date of publication and mention of the grant of the patent: **17.12.2014**
(21) Application number: 09155718.1
(22) Date of filing: 20.03.2009
(51) Int. Cl.: H02B 13/065

(54) **Encapsulation system for a single phase encapsulated channel switchgear**
Verkapselungssystem für einphasige verkapselte Schaltanlage
Système d'encapsulation pour un appareillage de commutation de canaux encapsulés à phase unique

(43) Date of publication of application: 22.09.2010
(73) Proprietor: ABB Research Ltd., 8050 Zürich (CH)
(72) Inventor: Breder, Henrik, 72347 Västerås (SE); Öhrström, Magnus, 771 43 Ludvika (SE)
(74) Representative: Kock, Ina

(56) References cited:
- DE-A1- 19 838 277
- US-A- 3 610 947
- US-A- 4 249 126
- US-A- 4 742 423

## Description

### Field of the invention

The present invention relates to an encapsulation system for a switchgear according to the preamble of the independent claim. The invention particularly relates to an encapsulation system for handling of faults in a switchgear.

### Background of the invention

A switchgear is mainly a circuit breaker of larger scale which makes it possible to cut of the current to a certain cable in large power networks and in industries. The switchgear first of all comprises a circuit breaker, and also a disconnecting switch to be able to safely work with the switchgear. The whole switchgear is grounded as a security measure.

Measuring transformers or transducers measure the currents and voltages, respectively, which pass through the switchgear. The measured values are supplied to security equipment which senses overloading, earth faults and other faults to alarm or to disconnect the current. The values from the measuring transformers may also be used for revenue. Large switchgears normally have security protection to manage different faults on the lines, e.g. voltage peaks. Nowadays most of the switchgears can be remotely controlled and monitored, but many are still manually controlled by e.g. a circuit breaker handle.

Medium- and low voltage switchgears conventionally use vertically divided switchgear panels to encase the switchgear. Apart from circuits and various apparatuses, the panels used today include a variety of utility functions such as control, protection and measurement, as mentioned above, and auxiliary power is provided.

The panel switchgear optionally includes security protection to handle problems such as internal arcs. An internal arc may occur due to component and apparatus faults, or by outside objects. In traditional switchgears an internal arc has the effect that the current/voltage greatly increases and thus causes an arc fault. An arc fault may for example occur if a worker inadvertently shorts out a power bus. The arc fault is accompanied by a sudden and extreme pressure increase, and the arc blast may cause considerable human hazard and damage to the switchgear and the applied process.

There are many suggested solutions for eliminating or decreasing faults caused by open arcs, for example relay protections are a common way to solve the problem. These relay protections may be in the shape of light detectors or pressure detectors for detecting when an arc arises and thereby trip a circuit breaker to extinguish the arc, and examples of such apparatuses and methods are known from e.g. US 6,229,680. In the paper "Arc flash hazard analysis and mitigation", Christopher Inshaw et al, Western Protective Relay Conference in Spokane, WA, October 20th, 2004, an arc flash detecting relay using fibre loop sensors(s) is described. By using light detectors, the coordination time is reduced and a faster detection of the arc flash is obtained, such as e.g. in the ABB products named "Arc Guard System® TVOC" and "Arc Eliminator".

Another fault detecting system is disclosed in US 4 249 126.

These methods are still time consuming as it takes time from discovering a fault until the fault is handled, and also require additional equipment, and there is thus a need for an improved way of handling faults such as internal arc faults.

### Summary of the invention

The object of the present invention is to reduce the risk of having internal faults in a switchgear, and to handle the faults which yet occur.

The above-mentioned object is achieved by an encapsulation system for a medium or low voltage switchgear according to the independent claim. The switchgear comprising several live phase conductors, and an encapsulation system, wherein the encapsulation system comprises inner single phase encapsulations of respective phase. The encapsulation system further comprises a fault handling system for handling of faults by means of adjusting the impedance of the inner single phase encapsulations.

The invention thus relates to an encapsulation system for a switchgear of channel-type, which is a way to achieve a panel-less switchgear. A panel-less switchgear is a switchgear which is not built up with conventionally vertically divided switchgear panels. In a panel-less switchgear auxiliary functions may be integrated in the encapsulation. This type of switchgear reduces the need for a large common space for the auxiliary functions of the switchgear, as some parts of the auxiliary functions may be integrated in the encapsulations of the switchgear. With new types of communication the auxiliary functions may be partly separated from the switchgear and be placed in separate compartments. For example, a channel switchgear may be placed below ground in a cable tray, trench or channel, as some necessary functions already may be incorporated in the switchgear cable, i.e. the encapsulated switchgear.

By actively controlling or pre-adjusting the zero-sequence and phase-phase double fault impedance, fault handling may be achieved in single phase encapsulated channel switchgear according to the invention, or more precisely, panel less switchgear. Thus, by having single phase encapsulation the risk of having an internal arc is greatly reduced. Faults thus occurring are handled by having a controlled impedance of the encapsulations of the phases.

Preferred embodiments are set forth in the dependent claims.

### Short description of the appended drawings

Figure 1 illustrates an encapsulation system according to one embodiment of the invention, when a single-phase fault occurs.
Figure 2 illustrates an encapsulation system according to one embodiment of the invention, when a two-phase fault occurs.
Figure 3 illustrates an encapsulation system according to one embodiment of the invention in a cross-section.
Figure 4 shows a block diagram of an encapsulation system according to the invention.
Figure 5 schematically illustrates how other loads may be connected to the encapsulation system according to the invention.

The invention will now be described in conjunction with the figures.

### Detailed description of preferred embodiments of the invention

The invention is preferably intended for medium voltage applications, but is also applicable to low voltage uses. The present invention thus relates to an encapsulation system 1 for a medium or low voltage switchgear, wherein the switchgear comprising several live phase conductors, and an encapsulation system 1. The encapsulation system 1 further comprises inner single phase encapsulations 2, 3, 4 of respective phase. The encapsulation system 1 also comprises a fault handling system for handling of faults by means of adjusting the impedance of the inner single phase encapsulations 2, 3, 4. The single phase encapsulation thus reduces the risk of having e.g. an open arc. By pre-adjusting or selecting the resistivity/impedance of the inner single phase encapsulation 2, 3, 4 of a single phase encapsulated switchgear; fault handling can be achieved in combination with the neutral grounding for zero and directly limiting e.g. the double phase fault cases.

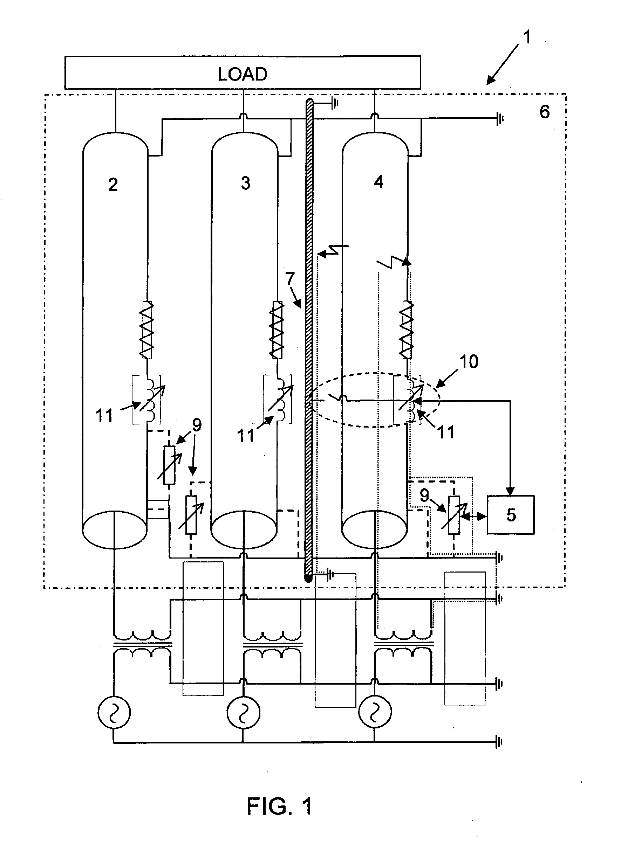

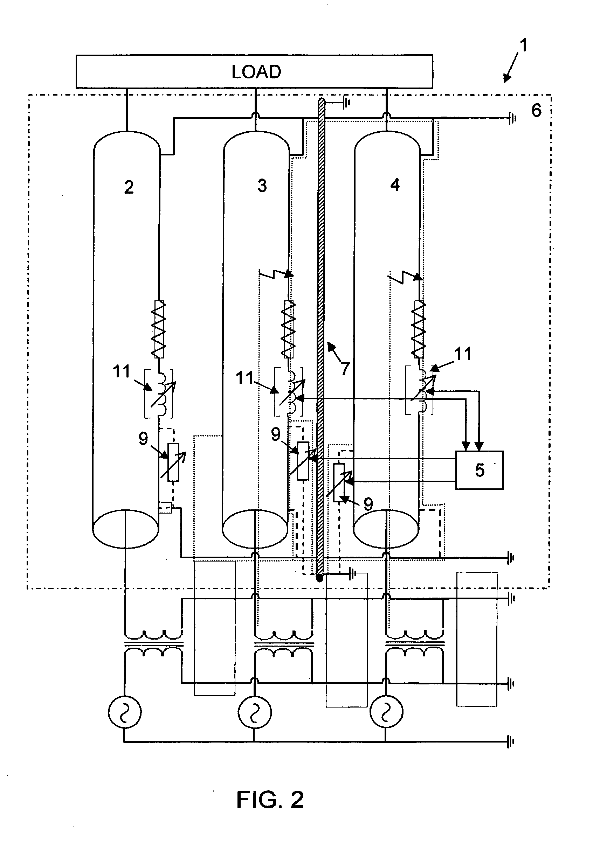

Figure 1 and 2 are showing encapsulating systems 1 for a switch according to the invention, where two different kinds of faults are illustrated. The encapsulation systems 1 are connected to a load on one side, and on the other side to a grid or other power source etc via transformers. Figure 1 illustrates what happens if a single-phase fault would occur; the way of the fault current is shown as a dotted line. Figure 2 illustrates a two-phase fault, and also here the way of the fault current is shown as a dotted line. The fault(s) may be an earth fault which is an electrical connection between a conductor of the main circuit with earth or an earthed part caused by a defect. The electrical connection can also be caused by an arc.

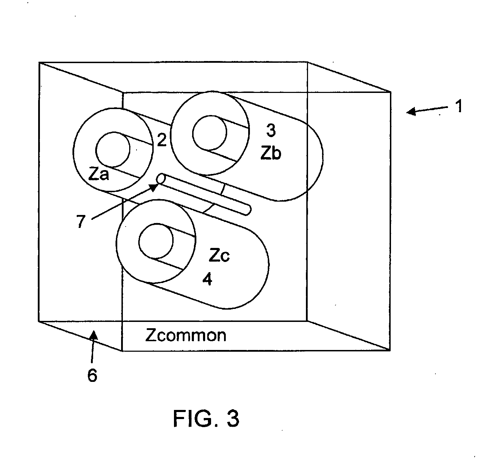

Preferably, the encapsulation system 1 comprises an outer encapsulation 6 enclosing all phases, as is illustrated in figure 3. Thus, touch voltages may be controlled by a common channel encapsulation 6. The outer encapsulation 6 is preferably connected to earth and is used as both touch protection and potential equalization. According to one embodiment, the touch protection is used in combination with equipotential conductors running along the channel.

The encapsulation system 1 according to the invention described so far thus comprises two parts: inner encapsulations by means of the single phase encapsulations 2, 3, 4 which comprises the fault handling system for adjusting the impedance of said inner single phase encapsulations 2, 3, 4, and an outer encapsulation 6 which is used as contact protection and potential equalization. The impedances of the inner single phase encapsulations are denoted Zₐ, Z_{b} and Z_{c}, and the impedance of the outer encapsulation is denoted Z_{common} in the figure 3, and it is thus the impedances Zₐ, Z_{b} and Z_{c} that are possible to adjust. Impedance values are chosen in accordance with the demands for the installation. To some extent it depends on which characteristics that are desired for the fault current, e.g. if it is desired to limit the fault current and then switch it off, or if it may be accepted to have a certain residual current during a certain time, before it is switched off.

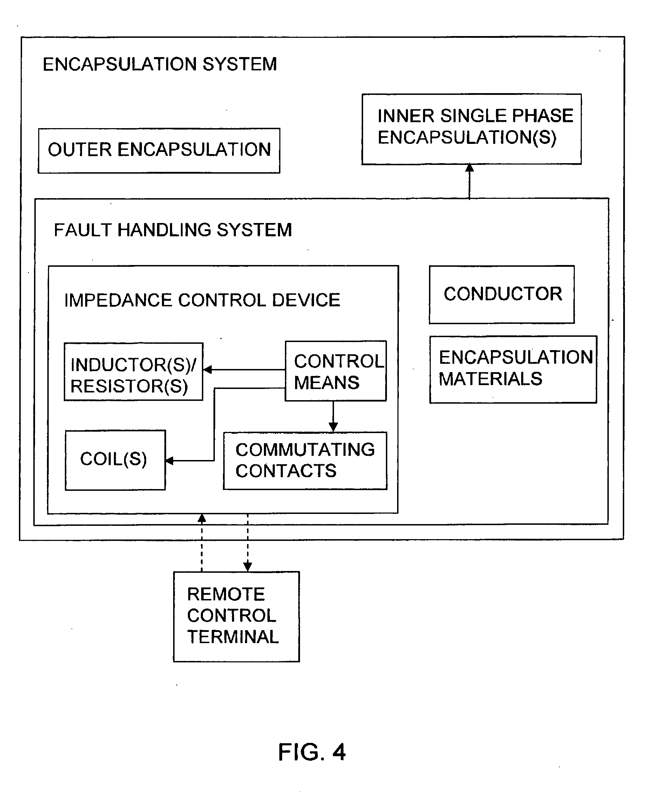

The fault handling system may comprise different parts for adjusting or enabling control of the inner single phase impedance. In figure 4 a block scheme of the invention is shown, illustrating possible embodiments of the invention which will be further described in the following. According to one embodiment, the fault handling system comprises a conductor 7 connected to earth, whereby the conductor 7 is placed in between the inner single phase encapsulated phases and may conduct fault currents to earth. This embodiment can be seen from figures 1, 2 and 3. Thus, an efficient way of conducting a fault current is achieved, which immediately reduces the risk of damaging the switchgear by way of the fault. If a fault occurs, e.g. an internal arc, the fault current may thus be forced to be conveyed along the conductor 7, as the conductor possesses a certain impedance and is connected to earth.

According to a further embodiment, the fault handling system comprises an impedance control device adapted to control the impedance of the inner single phase encapsulations 2, 3, 4. Thus, active control of the impedance of the inner single phase encapsulation may be achieved after the encapsulation system is produced, to meet various demands of the installation. The impedance control device comprises according to one embodiment a controllable earthing reactance or resistor 9 connected between the inner single phase encapsulation 2, 3, 4 of respective phase and earth to adjust the impedance. The impedance of the encapsulation may be controlled by adjusting the impedance of the controllable reactance or resistor 9 by a control means 5 shown in figure 1 to handle single-phase faults. Fault handling may thus be achieved by actively controlling or pre-adjusting the zero-sequence fault impedance. There may be a resistor or reactance connected between each single encapsulated phase 2, 3, 4 and earth, respectively, as shown in the figures, and they may all be controlled by control means 5 in the impedance control device. The single phase encapsulations should not be connected directly to earth, as can be seen from the figure 1 as dotted lines, if the controllable earthing reactance(s) or resistor(s) 9 is/are used. According to one embodiment, the impedance control device comprises a switch to turn the impedance 9 on or off. The impedance 9 may also be varied by controlling the resistance or reactance from the control means 5 of the impedance control device.

In figure 2 is shown three variable impedances 9, each connected between an inner single phase encapsulation 2, 3, 4 and conductor 7/earth. Thus, if a two-phase fault occurs, the impedance of the encapsulations may be controlled by adjusting the impedance of the controllable reactances or resistors 9. Fault handling may thus be achieved by actively controlling or pre-adjusting the phase to phase double fault impedance. The single phase encapsulations should not be connected directly to earth, as can be seen from the figures 2 as dotted lines, if the controllable earthing reactance(s) or resistor(s) 9 is/are used. The reactance or resistor may according to one embodiment be a zero point reactance or resistor. The impedance control device then comprises control means 5 to control the controllable reactor(s) and resistor(s).

In the cases when the fault current is not switched off, in connection with the current limitation obtained with the fault handling system according to the invention, considerable more heat is developed in a resistor than in a reactance with equivalent limitation capabilities. It may then be preferred to use reactances instead of resistors to control the impedance.

According to one embodiment, the impedance control device comprises at least one commutating contact 10, as can be seen in figure 1, to therewith conduct fault currents to earth. The impedance control device then advantageously comprises control means 5 to control the at least one commutating contact 10. Thus, one way to actively control the fault current is to conduct the fault current different ways, by coupling more or less impedance by means of commutating contacts. It is to be understood that there may commutating contacts 10 connected between each single encapsulated phase 2, 3, 4 and the conductor 7, respectively.

The fault handling system may thus comprise both the controllable reactance(s) or resistor(s) 9 and commutating contacts 10 as explained above. According to one embodiment, the impedance control device may comprise at least one coil 11 arranged along the inner single phase encapsulation 2, 3, 4 of respective phase of the switchgear system. The coil 11 may be part of a commutating contact 10 explained above. In the figures 1 and 2, the coil is schematically illustrated, denoted 11. The impedance control device includes control means 5 to control the reactance of the coil 11 according to different demands of the construction. The fault handling system may thus comprise the coil(s) 11 in addition to controllable reactance(s) and/or resistor(s) 9, commutating contact(s) 10 and conductor 7. Accordingly, the fault handling of the encapsulation system 1 is improved.

The coil(s) 11 may be arranged in a plurality of ways. According to one embodiment, the at least one coil 11 is wound around the inner single phase encapsulation 2, 3, 4 of respective phase of the switchgear. In the figures 1 and 2, the coil(s) is/are schematically shown as a variable reactance 11 in the encapsulation 2, 3, 4, respectively, but it is thus to be understood that the coil(s) 11 may be arranged wound around the inner single phase encapsulation(s) 2, 3, 4. The at least one coil 11 may according to one embodiment be covered by a layer of electrically insulating material. Then, the coil 11 will not interact with the encapsulation around which it is wound, thus only conduct currents from different contacts points. According to one embodiment, the at least one coil 11 is covered by a layer of electrically non-insulating material. Thus, the coil 11 may interact with the encapsulation 2, 3, 4 around which it is wound along the entire length of the encapsulation 2, 3, 4.

According to one embodiment, the inner single phase encapsulations 2, 3, 4 are covered by layers made from any of a conducting material, a semi-conducting material or a non-linear material (e.g. PTC - Positive Temperature Coefficient, materials that experience an increase in electrical resistance when their temperature is raised). This embodiment may be used in conjunction with the coil 11 explained above, and may thus give rise to further possible embodiments which give desired controllable impedance to the system.

According to one embodiment, the fault handling system is remotely controlled. With signal transmission and communication techniques such as radio, WLAN, Bluetooth and optical fibres it is possible to remotely control the fault handling by means of transmitting signals from a remote control terminal to the impedance control device as illustrated in figure 4. The impedance control device thus comprises means to both transmit and receive remote signals. The transmitted signals from the impedance control device may be used for analysing purposes.

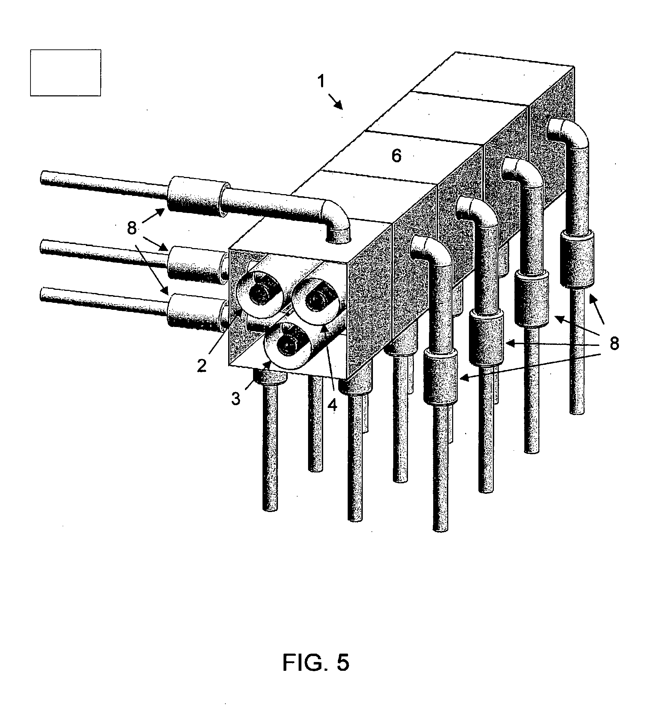

Figure 5 shows an encapsulation system 1, which illustrates how apparatuses such as circuit breaker, disconnecting switch and/or measuring systems may be connected to the phases via the encapsulation system 1. The parts 8 extending from the encapsulation system 1 illustrates the different connectable apparatuses.

The encapsulation system according to the invention may use some kind of isolating medium in the encapsulation e.g. gas mixtures such as dry air, possibly under pressure.

The present invention is not limited to the above-described preferred embodiments. Various alternatives, modifications and equivalents may be used. Therefore, the above embodiments should not be taken as limiting the scope of the invention, which is defined by the appending claims.

## Claims

1. An encapsulation system (1) for a medium or low voltage switchgear, said switchgear comprising several live phase conductors, wherein the encapsulation system (1) comprises inner single phase encapsulations (2, 3, 4) of respective phase,
**characterized in that** said encapsulation system (1) comprises a fault handling system for handling of faults, said fault handling system comprises an impedance control device adapted to control the impedance of the inner single phase encapsulations (2, 3, 4).

2. An encapsulation system according to claim 1, wherein said encapsulation system further comprises an outer encapsulation (6) enclosing all phases.

3. An encapsulation system according to any of claim 1 or 2, wherein said fault handling system comprises a conductor (7) connected to earth, whereby the conductor (7) is placed in between said inner single phase encapsulated phases and may conduct fault currents to earth.

4. An encapsulation system according to claim 3, wherein said impedance control device comprises a controllable earthing reactance or resistor (9) connected between said inner single phase encapsulation (2, 3, 4) of respective phase and earth to adjust the impedance.

5. An encapsulation system according to any of claims 3 or 4, wherein said impedance control device comprises at least one commutating contact (10) to therewith conduct fault currents to earth.

6. An encapsulation system according to any of claims 3 to 5, wherein said impedance control device comprises at least one coil (11) arranged along the inner single phase encapsulation (2, 3, 4) of respective phase of the switchgear.

7. An encapsulation system according to claim 6, wherein said at least one coil (11) is wound around said inner single phase encapsulation (2, 3, 4) of respective phase of the switchgear.

8. An encapsulation system according to any of claims 6 or 7, wherein said at least one coil (11) is covered by a layer of electrically insulating material.

9. An encapsulation system according to any of claims 6 or 7, wherein said at least one coil (11) is covered by a layer of electrically non-insulating material.

10. An encapsulation system according to any of the preceding claims, wherein said inner single phase encapsulations (2, 3, 4) are covered by layers made from any of a conducting material, a semi-conducting material or a non-linear material (e.g. PTC - Positive Temperature Coefficient).

11. An encapsulation system according to any of the claims 2 to 10, wherein said outer encapsulation (6) is connected to earth and is used as touch protection and potential equalization.

12. An encapsulation system according to any of the preceding claims, wherein apparatuses such as circuit breaker, disconnecting switch and/or measuring systems may be connected to the phases via said encapsulation system (1).

13. An encapsulation system according to any of the preceding claims, wherein said fault handling system is remotely controlled.

## Patentansprüche

1. Verkapselungssystem (1) für eine Mittel- oder Niederspannungs-Schaltanlage, wobei die Schaltanlage mehrere spannungsführende Phasenleiter umfasst, wobei das Verkapselungssystem (1) innere einphasige Verkapselungen (2, 3, 4) einer jeweiligen Phase umfasst,
**dadurch gekennzeichnet, dass** das Verkapselungssystem (1) ein Fehlerverarbeitungssystem zum Verarbeiten von Fehlern aufweist, wobei das Fehlerverarbeitungssystem eine Impedanzsteuervorrichtung umfasst, die so ausgelegt ist, dass sie die Impedanz der inneren einphasigen Verkapselungen (2, 3, 4) steuert.

2. Verkapselungssystem nach Anspruch 1, wobei das Verkapselungssystem ferner eine äußere Verkapselung (6) aufweist, die sämtliche Phasen umschließt.

3. Verkapselungssystem nach einem der Ansprüche 1 oder 2, wobei das Fehlerverarbeitungssystem einen Leiter (7) umfasst, der mit Erde verbunden ist, wobei der Leiter (7) zwischen den inneren einphasigen verkapselten Phasen platziert ist und Fehlerströme zur Erde leiten kann.

4. Verkapselungssystem nach Anspruch 3, wobei die Impedanzsteuervorrichtung eine(n) steuerbare(n) Erdungsreaktanz oder -widerstand (9) umfasst, die/der zwischen den inneren einphasigen Verkapselungen (2, 3, 4) einer jeweiligen Phase und Erde geschaltet ist, um die Impedanz einzustellen.

5. Verkapselungssystem nach einem der Ansprüche 3 oder 4, wobei die Impedanzsteuervorrichtung mindestens einen Kommutierungskontakt (10) umfasst, um mit diesem Fehlerströme zur Erde zu leiten.

6. Verkapselungssystem nach einem der Ansprüche 3 bis 5, wobei die Impedanzsteuervorrichtung mindestens eine Spule (11) aufweist, die entlang der inneren einphasigen Verkapselung (2, 3, 4) einer jeweiligen Phase der Schaltanlage angeordnet ist.

7. Verkapselungssystem nach Anspruch 6, wobei die mindestens eine Spule (11) um die innere einphasige Verkapselung (2, 3, 4) einer jeweiligen Phase der Schaltanlage herum gewickelt ist.

8. Verkapselungssystem nach einem der Ansprüche 6 oder 7, wobei die mindestens eine Spule (11) mit einer Schicht aus elektrisch isolierendem Material bedeckt ist.

9. Verkapselungssystem nach einem der Ansprüche 6 oder 7, wobei die mindestens eine Spule (11) mit einer Schicht aus nicht elektrisch isolierendem Material bedeckt ist.

10. Verkapselungssystem nach einem der vorhergehenden Ansprüche, wobei die inneren einphasigen Verkapselungen (2, 3, 4) mit Schichten aus einem von einem leitenden Material, einem halbleitenden Material oder einem nichtlinearen Material (z. B. PTC - Positive Temperature Coefficient = Positiver Temperaturkoeffizient) bedeckt sind.

11. Verkapselungssystem nach einem der Ansprüche 2 bis 10, wobei die äußere Verkapselung (6) mit Erde verbunden ist und als Berührungsschutz und Potenzialausgleich verwendet wird.

12. Verkapselungssystem nach einem der vorhergehenden Ansprüche, wobei Einrichtungen, wie z. B. Ausschalter, Trennschalter und/oder Messsysteme über das Verkapselungssystem (1) mit den Phasen verbunden sein können.

13. Verkapselungssystem nach einem der vorhergehenden Ansprüche, wobei das Fehlerverarbeitungssystem ferngesteuert ist.

## Revendications

1. Système d'encapsulation (1) pour un appareillage de commutation à moyenne ou basse tension, ledit appareillage de commutation comprenant plusieurs conducteurs de phase sous tension, ce système d'encapsulation (1) comprenant des encapsulations internes de phase unique (2, 3, 4) des phases respectives,
**caractérisé en ce que** ledit système d'encapsulation (1) comprend un système de traitement de défauts pour le traitement des défauts, ledit système de traitement de défauts comprenant un dispositif de contrôle d'impédance pour contrôler l'impédance des encapsulations internes de phase unique (2, 3, 4).

2. Système d'encapsulation selon la revendication 1, ledit système d'encapsulation comprenant en outre une encapsulation externe (6) renfermant toutes les phases.

3. Système d'encapsulation selon l'une quelconque des revendications 1 ou 2, dans lequel ledit système de traitement de défauts comprend un conducteur (7) connecté à la terre, comme quoi ce conducteur (7) est placé entre lesdites phases à encapsulation interne de phase unique et peut conduire les courants de défaut à la terre.

4. Système d'encapsulation selon la revendication 3, dans lequel ledit dispositif de contrôle d'impédance comprend une réactance ou une résistance de mise à la terre contrôlable (9) connectée entre ladite encapsulation interne de phase unique (2, 3, 4) des phases respectives et la terre pour ajuster l'impédance.

5. Système d'encapsulation selon l'une quelconque des revendications 3 ou 4, dans lequel ledit dispositif de contrôle d'impédance comprend au moins un contact de commutation (10) pour conduire les courants de défaut à la terre avec celui-ci.

6. Système d'encapsulation selon l'une quelconque des revendications 3 ou 5, dans lequel ledit dispositif de contrôle d'impédance comprend au moins une bobine (11) disposée le long de l'encapsulation interne de phase unique (2, 3, 4) des phases respectives de l'appareillage de commutation.

7. Système d'encapsulation selon la revendication 6, dans lequel ladite au moins une bobine (11) est enroulée autour de ladite encapsulation interne de phase unique (2, 3, 4) des phases respectives de l'appareillage de commutation.

8. Système d'encapsulation selon l'une quelconque des revendications 6 ou 7, dans lequel ladite au moins une bobine (11) est couverte par une couche de matériau électriquement isolant.

9. Système d'encapsulation selon l'une quelconque des revendications 6 ou 7, dans lequel ladite au moins une bobine (1) est couverte par une couche de matériau électriquement non isolant.

10. Système d'encapsulation selon l'une quelconque des revendications précédentes, dans lequel lesdites encapsulations internes de phase unique (2, 3, 4) sont couvertes par des couches faites à partir de n'importe lequel des matériaux suivants : un matériau conducteur, un matériau semi-conducteur ou un matériau non linéaire (par exemple CTP - coefficient de température positif).

11. Système d'encapsulation selon l'une quelconque des revendications 2 à 10, dans lequel ladite encapsulation externe (6) est connectée à la terre et est utilisée pour protéger contre le toucher et égaliser le potentiel.

12. Système d'encapsulation selon l'une quelconque des revendications précédentes, dans lequel des appareils tels qu'un disjoncteur, un sectionneur et/ou des systèmes de mesure peuvent être connectés aux phases par l'intermédiaire dudit système d'encapsulation (1).

13. Système d'encapsulation selon l'une quelconque des revendications précédentes, dans lequel ledit système de traitement de défauts est commandé à distance.
